# EUROPÄISCHE PATENTSCHRIFT

(11) **EP 1 720 930 B1**
(45) Veröffentlichungstag und Bekanntmachung des Hinweises auf die Patenterteilung: **04.03.2015**
(21) Anmeldenummer: 04804856.5
(22) Anmeldetag: 15.12.2004
(51) Int. Cl.: C08G 69/02, C08G 69/14, C08G 69/26, C08G 63/123, C08G 63/127, C08G 63/16, C08G 63/181, C08G 63/183, B29C 67/00

(54) **VERWENDUNG IN EINEM FORMGEBENDEN VERFAHREN MIT NICHT FOKUSSIERTEM ENERGIEEINTRAG UND FORMKÖRPER, HERGESTELLT AUS COPOLYMERPULVER**
SHAPING METHOD WHICH USES A NON-FOCUSSED APPLICATION OF ENERGY AND MOULDED BODY THAT IS PRODUCED FROM COPOLYMER POWDER
PROCEDE DE FACONNAGE FAISANT APPEL A UN APPORT D'ENERGIE NON FOCALISE, ET CORPS MOULES PRODUITS A PARTIR D'UNE POUDRE COPOLYMERE

(30) Priorität: 27.02.2004 DE 102004010162
(43) Veröffentlichungstag der Anmeldung: 15.11.2006
(73) Patentinhaber: Evonik Degussa GmbH, 45128 Essen (DE)
(72) Erfinder: MONSHEIMER, Sylvia, 45721 Haltern am See (DE); BAUMANN, Franz-Erich, 48249 Dülmen (DE); GREBE, Maik, 44805 Bochum (DE); VON DER BEY, Eva, 45721 Haltern am See (DE)
(86) Internationale Anmeldenummer: PCT/EP2004/053505
(87) Internationale Veröffentlichungsnummer: WO 2005/082973

(56) Entgegenhaltungen:
- EP-A- 0 428 760
- WO-A-01/38061
- DE-A1- 4 433 118
- US-A- 5 134 221

## Beschreibung

Die zügige Bereitstellung von Prototypen ist eine in der jüngsten Zeit häufig gestellte Aufgabe. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da das die aufgeschmolzenen Bereiche umgebende Pulverbett ausreichende Stützwirkung bietet. Ebenso entfällt die Nacharbeit, Stützen zu entfernen. Diese Verfahren sind auch für die Herstellung von Kleinserien geeignet.

Die Erfindung betrifft die Bereitstellung von Formkörpern und Verfahren zu deren Herstellung aus Copolymerpulvern auf Basis von thermoplastischen statistischen Copolymeren mit einem MFR-Wert nach ISO 1133 zwischen 12 g/10min und 1 g/10min, bevorzugt zwischen 10 g/10min und 1 g/10min, vorzugsweise Copolyamiden mit einer relativen Lösungsviskosität in m-Kresol nach DIN 53727 zwischen 1,55 und 1,9, bevorzugt zwischen 1,6 und 1,7, aber auch Copolyestern, die Verwendung dieser Pulver in formgebenden Verfahren, sowie Formkörper, hergestellt durch ein schichtweise arbeitendes Verfahren, mit welchem selektiv Bereiche einer Pulverschicht durch den Eintrag elektromagnetischer Energie aufgeschmolzen werden, unter Verwendung dieser Pulver. Nach Abkühlen und Verfestigen der zuvor aufgeschmolzenen Bereiche kann der Formkörper dem Pulverbett entnommen werden.

Die Selektivität der schichtweise arbeitenden Verfahren kann dabei beispielsweise, ohne die Erfindung darauf beschränken zu wollen, über den Auftrag von Suszeptoren, Absorber, Inhibitoren, oder durch Masken, erfolgen. Die Selektivität erfolgt nicht über den Eintrag der elektromagnetischen Energie.
Im Folgenden werden einige Verfahren beschrieben, mit denen aus dem erfindungsgemäßen Pulver erfindungsgemäße Formteile hergestellt werden können, ohne dass die Erfindung darauf beschränkt werden soll.

Gut geeignete Verfahren sind das SIV-Verfahren wie es in WO 01/38061 beschrieben, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen der Pulverpartikel benötigte Energie durch einen Mikrowellengenerator eingebracht und die Selektivität wird durch Auftragen eines Suszeptors erreicht.

Für die genannten Rapid-Prototyping- bzw. Rapid-Manufacturing-Verfahren (RP- oder RM-Verfahren) können pulverförmige Substrate, insbesondere Polymere, vorzugsweise ausgewählt aus Polyester, Polyvinylchrlorid, Polyacetal, Polypropylen, Polyethylen, Polystyrol, Polycarbonat, Poly-(N-methylmethycrylimide) (PMMI), Polymethylmethacrylat (PMMA), Ionomer, Polyamid, eingesetzt werden.

In DE 44 33 118 werden Polymerblends unter Einwirkung elektromagnetischer Energie betrachtet. Ein Blend ist aber eine unter definierten Temperatur- und Scherbedingungen aus zwei oder mehr Polymeren in der Schmelze hergestellte Mischung, die üblicherweise zu Granulaten verarbeitet wird. Die einzelnen Polymerketten werden dabei untereinander vermischt ("intermolekular"), innerhalb einer Kette findet jedoch keine Rekombination der Ausgangskomponenten statt (Definition s. beispielsweise Sächtling Kunststofftaschenbuch, 24. Auflage, S. 7 ff.) .

Nachteilig ist bei der Verarbeitung, dass zur Vermeidung des sogenannten Curls die Temperatur in dem Bauraum möglichst gleichmäßig auf einem Niveau knapp unterhalb des Schmelzpunktes des polymeren Werkstoffes gehalten werden muss. Bei amorphen Polymeren ist damit eine Temperatur knapp unterhalb der Glasübergangstemperatur gemeint, bei teilkristallinen Polymeren eine Temperatur knapp unterhalb des Kristallitschmelzpunktes. Mit Curl ist ein Verzug des bereits aufgeschmolzenen Bereiches gemeint, der ein zumindest teilweises Herausragen aus der Bauebene bewirkt. Es besteht damit die Gefahr, dass beim Auftrag der nächsten Pulverschicht, beispielsweise durch einen Rakel oder eine Walze, die herausragenden Bereiche verschoben oder sogar ganz herausgerissen werden. Das hat für den Prozess zur Folge, dass die Bauraumtemperatur insgesamt auf einem relativ hohen Niveau gehalten werden muss, und dass die durch Abkühlen und durch Kristallisation bedingte Volumenänderung der mit solchen Verfahren hergestellten Formkörpern erheblich ist. Nicht zuletzt wird durch den Abkühlprozess eine gerade für die "Rapid"- Verfahren nicht unerhebliche Zeitspanne benötigt. Ein weiterer Nachteil der teilkristallinen Thermoplaste ist in vielen Fällen ihre Kristallinität, bzw. die dadurch verursachte Änderung des Volumens während des Abkühlens aus der Schmelze heraus. Es besteht zwar die Möglichkeit, durch eine sehr aufwendige und genaue Temperaturführung die Volumenänderung durch Kristallinität einer einzelnen Schicht weitgehend zu vergleichmäßigen, jedoch ist die kristallisationsbedingte Volumenänderung beliebig aufgebauter dreidimensionaler Formkörper über den Formkörper nicht gleichmäßig. Beispielsweise hängt die Ausbildung kristalliner Strukturen von der Abkühlgeschwindigkeit des Formkörpers ab, die an unterschiedlich dicken Stellen oder an verwinkelten Stellen anders ist als an anderen Stellen des Formkörpers.

Ein Nachteil der amorphen Thermoplaste ist die hohe Viskosität, die nur deutlich oberhalb des Schmelzpunktes bzw. der Glasübergangstemperatur ein Zusammenfließen ermöglicht Häufig sind mit amorphen Thermoplasten nach obigen Verfahren hergestellte Formkörper daher relativ porös; es werden lediglich Sinterhälse ausgebildet, und die einzelnen Pulverpartikel sind im Formkörper noch erkennbar. Bei Erhöhung des Energieeintrages zur Viskositätsreduzierung kommt jedoch das Problem der Formtreue hinzu; beispielsweise durch Wärmeleitung von den aufzuschmelzenden in die umliegenden Bereiche werden die Konturen des Formkörpers unscharf.

Nachteilig ist ebenfalls, dass andere in verschiedene Richtungen gehende Anforderungen gegebenenfalls von einem einzelnen Material möglicherweise nicht erfüllt werden können, wie beispielsweise Viskosität, thermische Stabilität, Schwund, Festigkeit, Schlagzähigkeit, und Verarbeitbarkeit Die Verwendung von Pulvermischungen zu diesem Zweck sind durchaus bekannt, bergen aber weitere Nachteile in sich. So ist beispielsweise die Konstanz der Mischungen auch über den Herstellprozess, den Verarbeitungsprozess und ggf. den Wiederaufbereitungsprozess sicherzustellen. Haben die Komponenten unterschiedliche Schmelzpunkte, so sind die Möglichkeiten, die Mischung rein nach den gewünschten Eigenschaften des Formkörpers einzustellen, sehr eingeschränkt. In der Praxis hat sich gezeigt, dass dann der tiefer liegende Schmelzpunkt die Verarbeitung dominiert, so dass die höherschmelzende Komponente nicht aufschmilzt und nur wie ein Füllstoff wirkt und damit auch ihre gewünschten Eigenschaften unter Umständen nicht oder nicht voll zum Tragen kommen.

Aufgabe der vorliegenden Erfindung war es deshalb, ein Polymerpulver bereitzustellen, welches die Einstellung von maßgeschneiderten Eigenschaften bezüglich der Verarbeitung, aber auch bezüglich der gewünschten Formkörpereigenschaften flexibler ermöglicht Das Verarbeitungsverfahren ist dabei ein pulverbasierendes schichtweise arbeitendes Verfahren, bei dem selektiv Bereiche der jeweiligen Schicht durch den nicht fokussierten Eintrag elektromagnetischer Energie aufgeschmolzen werden und sich nach dem Abkühlen zu dem gewünschten Formkörper verbinden, wobei die Selektivität dabei beispielsweise über den Auftrag von Suszeptoren, oder Absorbern, oder Inhibitoren, oder durch Masken, erfolgt.

Überraschenderweise wurde nun gefunden, dass sich durch die Verwendung von thermoplastischen statistischen Copolymeren mit einem MFR-Wert zwischen 12 und 1 g/10min, bevorzugt zwischen 10 und 1 g/10min, Polymerpulver herstellen lassen, aus denen sich Formkörper durch ein schichtweise arbeitendes Verfahren, bei welchem selektiv Bereiche der jeweiligen Schicht durch den Eintrag elektromagnetischer Energie aufgeschmolzen werden, produzieren lassen, die Vorteile bezüglich der Verarbeitbarkeit aufweisen oder unterschiedliche Formkörpereigenschaften in einem Bauteil vereinigen.

Gegenstand der vorliegenden Erfindung ist deshalb ein schichtweise arbeitendes Verfahren, bei welchem selektiv Bereiche der jeweiligen Pulver-Schicht durch den Eintrag elektromagnetischer Energie aufgeschmolzen werden, welches dadurch gekennzeichnet ist, dass das Pulver zumindest ein thermoplastisches statistisches Copolymer mit einem MFR-Wert nach ISO 1133 zwischen 12 g/10min und 1 g/10min, bevorzugt zwischen 10 g/10min und 1 g/10min, bevorzugt ein Copolyamid mit einer relativen Lösungsviskosität in m-Kresol nach DIN 53727 zwischen 1,55 und 1,9, bevorzugt zwischen 1,6 und 1,7, aufweist; besonders bevorzugt wird ein Copolyamid, bestehend aus mindestens einem der Bausteine aus der Gruppe der Lactame, der Diamin/Dicarbonsäure-Salze, und/oder der Aminocarbonsäuren. Ganz besonders bevorzugt weisen die erfindungsgemäßen Pulver Monomerbausteine aus der Gruppe aus Laurinlactam, Caprolactam, Aminoundecansäure, sowie annähernd äquimolare Mengen der Dicarbonsäuren Adipinsäure, Korksäure, Azelainsäure, Sebazinsäure, Dodecandisäure, Brassylsäure, Tetradecandisäure, Pentadecandisäure, Octadecandisäure, Terephthalsäure, Isophtalsäure, und der Diamine Hexamethylendiamin, 2-Methylpentamethylendiamin, 2,2,4-Trimethylhexamethylendiamin, 2,4,4-Trimethylhexamethylendiamin, Isophorondiamin, Piperazin, Bis-(4-Aminocyclohexyl)-methan bzw. der daraus gebildeten Nylonsalze, auf

Außerdem sind Gegenstand vorliegenden Erfindung Formkörper, hergestellt durch ein schichtweise arbeitendes Verfahren, bei welchem selektiv Bereiche der jeweiligen Pulverschicht durch den nicht fokussierten. Eintrag elektromagnetischer Energie aufgeschmolzen werden, wobei die Selektivität beispielsweise über Masken, oder durch den Auftrag von Suszeptoren, Inhibitoren, Absorbern, erreicht wird, welche dadurch gekennzeichnet sind, dass sie zumindest ein thermoplastisches statistisches Copolymer mit einem MFR-Wert zwischen 12 g/10min und 1 g/10min, bevorzugt zwischen 10 g/10min und 10 g/1min, bevorzugt ein Copolyamid mit einer Lösungsviskosität zwischen 1,55 und 1,9, bevorzugt zwischen 1,6 und 1,7, aufweisen. Besonders bevorzugt weisen die erfindungsgemäßen Formkörper ein Copolyamid, bestehend aus mindestens einem der Bausteine aus der Gruppe der Lactame, der Diamin/Dicarbonsäure-Salze, und/oder der Aminocarbonsäuren auf. Ganz besonders bevorzugt weisen die erfindungsgemäßen Formkörper Copolyamide mit Monomerbausteine aus der Gruppe aus Laurinlactam, Caprolactam, Aminoundecansäure, sowie annähernd äquimolare Mengen der Dicarbonsäuren Adipinsäure, Korksäure, Azelainsäure, Sebazinsäure, Dodecandisäure, Brassylsäure, Tetradecandisäure, Pentadecandisäure, Octadecandisäure, Terephthalsäure, Isophtalsäure, und der Diamine Hexamethylendiamin, 2-Methylpentamethylendiamin, 2,2,4-Trimethylhexamethylendiamin, 2,4,4-Trimethylhexamethylendiamin, Isophorondiamin, Piperazin, Bis-(4-Aminocyclohexyl)-methan bzw. der daraus gebildeten Nylonsalze, auf.

Das erfindungsgemäße Polymerpulver hat den Vorteil, dass aus ihm durch ein schichtweise arbeitendes Verfahren, bei dem selektiv Bereiche der jeweiligen Schicht aufgeschmolzen werden, hergestellte Formkörper sich bei deutlich niedrigeren Temperaturen herstellen lassen als Formkörper aus herkömmlichen Polymerpulvern. Dadurch wird die Herstellung von Formkörpern nach einem der beschriebenen Verfahren schneller und die Prozesssicherheit wird verbessert.

Die aus dem erfindungsgemäßen Pulver hergestellten Formkörper weisen dabei ähnlich gute mechanische Eigenschaften auf wie die aus herkömmlichem Pulver hergestellten Formkörper. Sie sind zwar meist weicher als Formkörper aus dem üblicherweise z. B. beim Lasersintern verwendeten nicht erfindungsgemäßen PA12-Polymerpulver, haben dafür aber oft eine sehr viel höhere Reißdehnung, so dass beispielsweise Schnapphaken sehr gut realisiert werden können. Zur Erzielung der mechanischen Eigenschaften ist es sinnvoll, daß der MFR-Wert des erfindungsgemäßen Pulvers zwischen 12 g/10min und 1 g/10min, bevorzugt zwischen 10 g/10min und 1 g/10min liegt. Im Falle des bevorzugten Copolyamids führt eine Lösungsviskosität zwischen 1,55 und 1,9, bevorzugt zwischen 1,6 und 1,7 zu den gewünschten mechanischen Eigenschaften. Bei höheren Werten des erfindungsgemäßen Pulvers für den MFR-Wert bzw. niedrigeren Werten für die Lösungsviskosität als angegeben verschlechtern sich die mechanischen Eigenschaften der mit dem Pulver nach einem der erfindungsgemäßen Verfahren gebauten Formkörper deutlich.

Das erfindungsgemäße Pulver hat weiterhin den Vorteil, daß es gut verarbeitbar ist mit den erfindungsgemäßen Verfahren. Bei niedrigeren Werten des erfindungsgemäßen Pulvers für. die Lösungsviskosität bzw. höheren Werten für den MFR-Wert als angegeben verschlechtert sich die Reproduzierbarkeit des Bauprozesses deutlich. Insbesondere ist nach dem Aufschmelzen der dafür vorgesehenen Bereiche einiger aufeinanderfolgender Schichten mit einem Verkleben von Pulverpartikeln auf der Auftragsvorrichtung, beispielsweise einer Walze oder einem Rakel, zu rechnen.
Bei höheren Werten des erfindungsgemäßen Pulvers im speziellen Fall des Copolyamids für die Lösungsviskosität als angegeben verschlechtern sich die mechanischen Eigenschaften wiederum stark, da ein Zusammenlaufen beim Aufschmelzen der einzelnen Pulverpartikel für die Bildung des Formkörpers nicht mehr gewährleistet ist

Außerdem konnte überraschend festgestellt werden, dass das Verarbeitungsfenster, d. h. die Temperaturdifferenz zwischen dem "Nichtauftreten" von Curl und flächigem Aufschmelzen des nicht zum Aufschmelzen vorgesehenen Pulvers, meist größer ist als bei der Verwendung von herkömmlichen Pulvern. Ein weiterer Vorteil ist der geringere Schwund bei den mit erfindungsgemäßen Pulvern hergestellten Formkörpern gegenüber Formkörpern aus teilkristallinen Homopolyamiden, beide mittels einem formgebenden Verfahren hergestellt, welches schichtweise arbeitet und wobei selektiv Bereiche der jeweiligen Pulverschicht durch Einbringen elektromagnetischer Energie aufgeschmolzen werden. Besonders bevorzugt wird das erfindungsgemäße Pulver in Verfahren verwendet, die nicht auf Fokussierung des Energieeintrages durch einen Laser beruhen. Der Geschwindigkeitsvorteil eines gleichzeitigen Energieeintrages über alle selektierten Bereiche bringt den Nachteil mit sich, dass der Wärmeleitung größere Bedeutung zukommt. An Stellen schlechter Wärmeabfuhr wie beispielsweise Ausschnitten ist eher mit dem Anbacken weiterer Partikel zu rechnen und damit mit einer Abweichung von der gewünschten Kontur. Die niedrigere Verarbeitungstemperatur der erfindungsgemäßen Pulver zeigt sich dabei als Vorteil, weil weniger Energie eingebracht werden muss. Die Temperaturdifferenz zwischen den aufzuschmelzenden Bereichen und ihrer Umgebung kann dadurch geringer gehalten werden.

Das erfindungsgemäße Copolymerpulver wird nachfolgend beschrieben, ohne dass die Erfindung darauf beschränkt sein soll.

Das erfindungsgemäße Copolymerpulver zum Verarbeiten in einem schichtweise arbeitenden Verfahren, bei welchem selektiv Bereiche der jeweiligen Pulverschicht durch den nicht fokussierten Eintrag elektromagnetischer Energie aufgeschmolzen werden, zeichnet sich dadurch aus, dass das Pulver zumindest ein thermoplastisches statistisches Copolymer mit einem MFR-Wert zwischen 12 g/10min und 1 g/10min, bevorzugt zwischen 10 g/10min und 1 g/10min, hergestellt aus wenigstens zwei Monomerbausteinen, aufweist. Bei dem Herstellverfahren kann es sich im einfachsten Fall um eine radikalische, oder eine anionische, oder eine kationische Copolymerisation handeln, oder aber um eine Copolymerisation nach Ziegler-Natta. Es gibt eine Vielzahl an Monomerbausteinen, die sich eignen, beispielsweise Ethen und Vinylacetat, Acrylnitril und Styrol, Tetrafluorethen und Propen, Ethen und 1-Buten, Trioxan und Ethylenoxid, Styrol und Butadien, oder aber eine Kombination von drei Monomerbausteinen aus Acrylnitril, Styrol, und Butadien das bekannte ABS. Die Monomerbausteine können aliphatisch oder aromatisch sein, und das entstehende Copolymere kann linear oder verzweigt sein. Es handelt sich um mindestens einen Baustein, der zumindestens in unterschiedlicher Isomorphie vorliegt, oder zwei Bausteine, aber auch Systeme mit drei (ternäre Systeme) oder mehr Bausteinen sind erfindungsgemäß. Meist sind die Copolymere amorph.

Besonders bevorzugt sind Copolyamide, deren Kristallinität man über die Zusammensetzung der Monomerbausteine steuern kann. Zur Herstellung werden Diamin/Dicarbonsäure-Salze und/oder Aminocarbonsäuren oder Lactamen verwendet. Die verwendeten Monomerbausteine sind beispielsweise Aminoundecansäure, sowie annähernd äquimolare Mengen der Dicarbonsäuren Adipinsäure, Korksäure, Azelainsäure, Sebazinsäure, Dodecandisäure, Brassylsäure, Tetradecandisäure, Pentadecandisäure, Octadecandisäure, Terephthalsäure, Isophtalsäure, und der Diamine Hexamethylendiamin, 2-Methylpentamethylendiamin, 2,2,4-Trimethylhexamethylendiamin, 2,4,4-Trimethylhexamethylendiamin, Isophorondiamin, Piperazin, Bis-(4-Aminocyclohexyl)-methan bzw. die daraus gebildeten Nylonsalze.

Insbesondere sind Kombinationen aus Caprolactam, Laurinlactam und AH-Salz bekannt, aber auch aus Caprolactam, Laurinlactam und DH-Salz, oder Caprolactam und Laurinlactam. Diese Copolyamide zeichnen sich insbesondere durch einen niedrigen Schmelzpunkt aus.

Neben aliphatischen Dicarbonsäuren finden aromatische Dicarbonsäuren Verwendung, die in der Regel zu höheren Glasübergangstemperaturen beitragen. Niedrig symmetrische Comonomere, insbesondere Trimethylhexamethylendiamin (TMD, Isomerengemisch), Isophorondiamin (IPD), Bis-(4-amino-cyclohexyl)-methan (PACM, Isomerengemisch), reduzieren darüber hinaus die Kristallinität - im Extremfall entsteht ein völlig amorphes Copolyamid - was zu höherer Maßhaltigkeit und gegebenenfalls erhöhter Transluzenz der Formkörper führt. Geeignete weitere Comonomere und Regeln zu ihrer Auswahl sind dem Fachmann bekannt und beispielsweise in J. G. Dolden, Polymer (1976, 17), pp 875-892 beschrieben.

Besonders bevorzugt sind statistische thermoplastische Copolyamide mit einer Lösunsgviskosität zwischen1,55 und 1,9, bevorzugt zwischen1,6 und 1,7 , welche man durch thermische Polykondensation von Monomergemischen aus Diamin/Dicarbonsäure-Salzen und/oder Aminocarbonsäuren oder Lactamen erhält. Die Durchführung gestaltet sich wie bei den Homopolyamiden, wobei natürlich die jeweiligen physikalisch-chemischen Eigenschaften, etwa Wasserlöslichkeit der Monomeren, Schmelzpunkt und thermische Beständigkeit der Polymere zu beachten sind. Es reicht dabei aus, wenn ein Monomeres als Isomerengemisch vorliegt.

Alternierende Copolyamide werden eher durch Lösungspolykondensation unter milden Bedingungen erzeugt. In der Schmelze gehen sie durch Umamidierungsreaktionen jedoch in statistische Copolyamide über.

Blockcopolymere aus verschiedenen Polyamiden erhält man in der Regel zweistufig, es wird zunächst ein Präpolymer erzeugt und dann mit der zweiten Komponente gemischt. Die dadurch erzeugten Strukturen der Blockcopolymeren sind jedoch nicht beständig und bilden sich bei höheren Temperaturen in eine statistische Verteilung bezüglich der Anordnung der Monomerbausteine zurück.

Durch Umsetzung von vorgebildeten Polyamiden mit anderen Monomeren kann man Pfropfcopolymere erhalten. Die Pfropfreaktion wird ionisch oder radikalisch an den NH-Gruppen längs der Polymerkette gestartet. Ein Beispiel ist die Umsetzung von PA6 mit Ethylenoxid zu hydrophilen bis wasserlöslichen Produkten.

Die Lösungsviskosität in 0,5%iger m-Kresol-Lösung nach DIN 53727 liegt bei den erfindungsgemäßen Copolyamiden zwischen 1,55 bis 1,9, bevorzugt 1,6 bis 1,7. Die Herstellung von Copolyamiden ist beispielsweise in DE 32 48 776 beschrieben und ist dem Fachmann bekannt.

Der MFR-Wert wird nach ISO 1133 ermittelt Die Bedingungen, nämlich Last und Temperatur, sind entsprechend materialabhängig in den Formmassennormen, z. B. für ABS in der ISO 2580-1, festgelegt. Es ist gängige Praxis, dass ein teilkristallines Copolyamid bei einer niedrigeren Temperatur, beispielsweise 160 °C, und ein völlig amorphes Copolyamid bei einer höheren Temperatur, beispielsweise 230 °C vermessen wird. Ein typisches Gewicht ist dabei 2,16 kg, aber auch dieser Wert ist nach den entsprechenden Formmassennormen materialabhängig festzulegen.

Weitere bevorzugte Copolymere sind Copolyester. Die Monomerbausteine sind beispielsweise Adipinsäure, Isophtalsäure, Dimethylterephtalat, 1,4-Butandiol, 1,6-Hexandiol, Polyethylenglycol.

Die bei der Herstellung thermoplastischen statistischen copolymer-aufweisenden Granulate werden anschließend bei tiefen Temperaturen vermahlen, beispielsweise bei -30 °C auf einer Prall- oder Stiftmühle unter Stickstoff, um pulverförmige Partikel zu erhalten. Zumindest eine Schutzsiebung zur Entfernung der sehr groben Partikel sollte anschließend durchgeführt werden. Meist ist eine anschließende Fraktionierung sinnvoll. Erfindungsgemäße Pulver liegen im Kornband 1 bis 150 mikron, bevorzugt 1 bis 120 mikron. Die Kornverteilung verbleibt dabei relativ breit. Typische Werte für das Verhältnis D90/D10 1 : 2 bis 1 : 15, bevorzugt 1 : 3 bis 1 : 5. Eine mechanische Nachbearbeitung, beispielsweise in einem schnellaufenden Mischer, zur Verrundung der beim Mahlen entstandenen scharfkantigen Partikel und damit zur besseren Auftragbarkeit dünnerer Schichten, kann ebenfalls sinnvoll sein.

Das erfindungsgemäße Polymerpulver weist vorzugsweise zumindest ein thermoplastisches statistisches Copolymer mit einem MFR-Wert nach ISO 1133 zwischen 12 g/10min und 1 g/10min, bevorzugt zwischen als 10 g/10min und 1 g/10min, und mit einer mittleren Partikelgröße von 10 bis 250 µm, vorzugsweise von 45 bis 150 µm und besonders bevorzugt von 50 bis 125 µm auf.

Erfindungsgemäße Copolyamidpulver oder Copolyesterpulver werden kommerziell beispielsweise unter dem Handelsnamen Vestamelt von der Degussa vertrieben.

Erfindungsgemäßes Copolymerpulver kann außerdem Hilfsstoffe und/oder Füllstoff und/oder weitere organische oder anorganische Pigmente aufweisen. Solche Hilfsstoffe können z.B. Rieselhilfsmittel, wie z.B. gefällte und / oder pyrogene Kieselsäuren sein. Gefällte Kieselsäuren werden zum Beispiel unter dem Produktnamen Aerosil, mit unterschiedlichen Spezifikationen, durch die Degussa AG angeboten. Vorzugsweise weist erfindungsgemäßes Copolymerpulver weniger als 3 Gew.-%, vorzugsweise von 0,001 bis 2 Gew.-% und ganz besonders bevorzugt von 0,05 bis 1 Gew.-% solcher Hilfsstoffe bezogen auf die Summe der vorhandenen Polymere auf Die Füllstoffe können z. B. Glas-, Metall- oder Keramikpartikel, wie z. B. Glaskugeln, Stahlkugeln oder Metallgrieß oder Fremdpigmente, wie z. B. Übergangsmetalloxide sein. Die Pigmente können beispielsweise Titandioxidpartikel basierend auf Rutil oder Anatas sein, oder Rußpartikel.

Die Füllstoffpartikel weisen dabei vorzugsweise eine kleinere oder ungefähr gleich große mittlere Partikelgröße wie die Partikel der Copolymere auf. Vorzugsweise sollte die mittlere Partikelgröße d₅₀ der Füllstoffe die mittlere Partikelgröße d₅₀ der Copolymere um nicht mehr als 20 %, vorzugsweise um nicht mehr als 15 % und ganz besonders bevorzugt um nicht mehr als 5 % unterschreiten. Die Partikelgröße ist insbesondere limitiert durch die zulässige Bauhöhe bzw. Schichtdicke in der Rapid-Prototyping/ Rapid Manufacturing-Anlage.

Vorzugsweise weist erfindungsgemäßes Copolymerpulver weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe bezogen auf die Summe der vorhandenen Copolymere auf.

Beim Überschreiten der angegebenen Höchstgrenzen für Hilfs- und/oder Füllstoffe kann es, je nach eingesetztem Füll- oder Hilfsstoff zu deutlichen Verschlechterungen der mechanischen Eigenschaften von Formkörpern kommen, die mittels solcher Copolymerpulver hergestellt wurden.

Es ist ebenso möglich, herkömmliche Polymerpulver mit erfindungsgemäßen Copolymerpulvern zu mischen. Auf diese Weise lassen sich Polymerpulver mit einer weiteren Kombination von mechanischen Eigenschaften und Verarbeitungsfenster herstellen. Das Verfahren zur Herstellung solcher Mischungen kann z.B. DE 34 41 708 entnommen werden.

Zur Verbesserung des Schmelzeverlaufs bei der Herstellung der Formkörper kann ein Verlaufsmittel wie beispielsweise Metallseifen, bevorzugt Alkali- oder Erdalkalisalze der zugrunde liegenden Alkanmonocarbonsäuren oder Dimersäuren, dem gefällten oder kalt gemahlenen Pulver zugesetzt werden. Die Metallseifenpartikel können in die Copolymerpartikel eingearbeitet werden, es können aber auch Mischungen von feinteiligen Metallseifenpartikeln und Copolymerpartikeln vorliegen.
Die Metallseifen werden in Mengen von 0,01 bis 30 Gew.-%, vorzugsweise 0,5 bis 15 Gew.-%, bezogen auf die Summe der im Pulver vorhandenen Copolymere, vorzugsweise Copolyamide, eingesetzt. Bevorzugt wurden als Metallseifen die Natrium- oder Calciumsalze der zugrundeliegenden Alkanmonocarbonsäuren oder Dimersäuren eingesetzt. Beispiele für kommerziell verfügbare Produkte sind Licomont NaV 101 oder Licomont CaV 102 der Firma Clariant.

Zur Verbesserung der Verarbeitungsfähigkeit oder zur weiteren Modifikation des Polymerpulvers können diesem anorganische Fremdpigmente, wie z.B. Übergangsmetalloxide, Stabilisatoren, wie z.B. Phenole, insbesondere sterisch gehinderte Phenole, Verlaufs- und Rieselhilfsmittel, wie z.B. pyrogene Kieselsäuren sowie Füllstoffpartikel zugegeben werden. Vorzugsweise wird, bezogen auf das Gesamtgewicht an Polymeren im Copolymerpulver, soviel dieser Stoffe den Polymeren zugegeben, dass die für das erfindungsgemäße Copolymerpulver angegeben Konzentrationen für Füll- und/oder Hilfsstoffe eingehalten werden.

Gegenstand der vorliegenden Erfindung sind auch Verfahren zur Herstellung von Formkörpern durch schichtweise arbeitende Verfahren, bei denen selektiv Bereiche durch den nicht fokussierten Eintrag elektromagnetischer Energie aufgeschmolzen werden, bei denen erfindungsgemäße Polymerpulver, die zumindest ein thermoplastisches statistisches Copolymer mit einem MFR-Wert zwischen 12 g/10min und 1 g/10min, bevorzugt zwischen 10 g/10min und 1 g/10min, bevorzugt ein Copolyamid mit einer Lösungsviskosität zwischen 1,55 und 1,9, vorzugsweise zwischen 1,6 und 1,7, aufweisen, eingesetzt werden. Besonders bevorzugt weist das erfindungsgemäße Pulver Copolyamide bestehend aus mindestens einem der Bausteine aus der Gruppe der Lactame, der Diamin/Dicarbonsäure-Salze, und/oder der Aminocarbonsäuren, auf Ganz besonders bevorzugt werden bei diesen Verfahren Pulver verwendet, die Copolyamide aufweisen, die Monomerbausteine aus der Gruppe aus Laurinlactam, Caprolactam, Aminoundecansäure, sowie annähernd äquimolaren Mengen der Dicarbonsäuren Adipinsäure, Korksäure, Azelainsäure, Sebazinsäure, Dodecandisäure, Brassylsäure, Tetradecandisäure, Pentadecandisäure, Octadecandisäure, Terephthalsäure, Isophtalsäure, und der Diamine Hexamethylendiamin, 2-Methylpentamethylendiamin, 2,2,4-Trimethylhexamethylendiamin, 2,4,4-Trimethylhexamethylendiamin, Isophorondiamin, Piperazin, Bis-(4-Aminocyclohexyl)-methan bzw. der daraus gebildeten Nylonsalze aufweisen.

Die Energie wird durch elektromagnetische Strahlung nicht fokussiert eingebracht, sondern beispielsweise gleichzeitig über die gesamte Schicht oder durch nicht fokussiertes Abfahren der Pulverschicht in Teilen oder als Ganzes, und die Selektivität wird beispielsweise durch Masken, oder durch Auftragung von Inhibitoren, Absorbern, oder Suszeptoren, erreicht Nach dem Abkühlen aller Schichten kann der erfindungsgemäße Formkörper entnommen werden. Das nicht aufgeschmolzene Pulver kann im nächsten Bauprozess wieder eingesetzt werden, gegebenenfalls in Abmischung mit Neupulver. Das Polymerpulver wird bei einer Baukammertemperatur zwischen 80 und 160 °C, vorzugsweise 85 und 120 °C, verarbeitet

Die nachfolgenden Beispiele für solche Verfahren dienen der Erläuterung, ohne die Erfindung darauf beschränken zu wollen.
Gut geeignete Verfahren sind das SIV-Verfahren wie es in WO 01/38061 beschrieben, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht und die Selektivität wird durch Auftragen eines Suszeptors erreicht.

Die erfindungsgemäßen Formkörper, die durch ein schichtweise arbeitendes Verfahren, bei dem selektiv Bereiche durch den nicht fokussierten Eintrag elektromagnetischer Energie aufgeschmolzen werden, hergestellt werden, zeichnen sich dadurch aus, dass sie zumindest ein statistisches thermoplastisches Copolymer mit einem MFR-Wert nach ISO 1133 zwischen 12 g/10min und 1 g/10min, bevorzugt zwischen 10 g/10min und 1 g/10min, aufweisen. Vorzugsweise weisen die erfindungsgemäßen Formkörper zumindest ein Copolyamid mit einer relativen Lösungsviskosität in m-Kresol nach DIN 53727 zwischen 1,55 und 1,9, bevorzugt zwischen 1,6 und 1,7, auf. Ganz besonders bevorzugt weisen erfindungsgemäße Formkörper zumindest ein Copolyamid, bestehend aus mindestens einem der Bausteine aus der Gruppe der Lactame, der Diamin/Dicarbonsäure-Salze, und/oder der Aminocarbonsäuren, auf. Ganz besonders bevorzugt weisen die erfindungsgemäßen Formkörper zumindest ein Copolyamid aufgebaut aus Monomerbausteinen aus der Gruppe aus Laurinlactam, Caprolactam, Aminoundecausäure, sowie annähernd äquimolaren Mengen der Dicarbonsäuren Adipinsäure, Korksäure, Azelainsäure, Sebazinsäure, Dodecandisäure, Brassylsäure, Tetradecandisäure, Pentadecandisäure, Octadecandisäure, Terephthalsäure, Isophtalsäure, und der Diamine Hexamethylendiamin, 2-Methylpentamethylendiamin, 2,2,4-Trimethylhexamethylendiamin, 2,4,4-Trimethylhexamethylendiamin, Isophorondiamin, Piperazin, Bis-(4-Aminocyclohexyl)-methan bzw. der daraus gebildeten Nylonsalze auf.

Die Formkörper können außerdem Füllstoffe und/oder Hilfsstoffe, wie z. B. thermische Stabilisatoren wie z. B. sterisch gehinderte Phenolderivate aufweisen. Füllstoffe können z. B. Glas-, Keramikpartikel und auch Metallpartikel wie zum Beispiel Eisenkugeln, bzw. entsprechende Hohlkugeln sein. Bevorzugt weisen die erfindungsgemäßen Formkörper Glaspartikel, ganz besonders bevorzugt Glaskugeln auf. Vorzugsweise weisen erfindungsgemäße Formkörper weniger als 3 Gew.-%, vorzugsweise von 0,001 bis 2 Gew.-% und ganz besonders bevorzugt von 0,05 bis 1 Gew.-% solcher Hilfsstoffe bezogen auf die Summe der vorhandenen Polymere auf. Ebenso bevorzugt weisen erfindungsgemäße Formkörper weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe bezogen auf die Summe der vorhandenen Polymere auf.

Die folgenden Beispiele sollen das erfindungsgemäße Polymerpulver, welches zumindest ein thermoplastisches statistisches Copolymer mit einem MFR-Wert nach ISO 1133 zwischen 12 g/10min und 1 g/10min, bevorzugt zwischen 10 g/10min und 1 g/10min, vorzugsweise Copolyamidpulver mit einer Lösungsviskosität nach DIN 53727 zwischen 1,55 und 1,9, bevorzugt zwischen 1,6 und 1,7, aufweist, sowie dessen Verwendung beschreiben, ohne die Erfindung auf die Beispiele einzuschränken.

Die Messwerte der Laserbeugung wurden mit dem Malvem Mastersizer S, Ver. 2.18, erhalten.

### Beispiel 1: Umfällung von Polyamid 12 (PA 12), nicht erfingdungsgemäß

400 kg ungeregeltes, durch hydrolytische Polymerisation hergestelltes PA 12 mit einer relativen Lösungsviskosität von 1.62 und einem Endgruppengehalt von 75 mmol/kg COOH bzw. 69 mmol/kg NH2 werden mit 2500 1 Ethanol, vergällt mit 2-Butanon und 1 % Wassergehalt, innerhalb von 5 Stunden in einem 3 m3-Rührkessel (d = 160 cm) auf 145 °C gebracht und unter Rühren (Blattrührer, d = 80 cm, Drehzahl = 49 Upm) 1 Stunde bei dieser Temperatur belassen. Anschließend wird die Manteltemperatur auf 124 °C reduziert und unter kontinuierlichem Abdestillieren des Ethanols mit einer Kühlrate von 25 K/h bei der derselben Rührerdrehzahl die Innentemperatur auf 125 °C gebracht. Von jetzt an wird bei gleicher Kühlrate die Manteltemperatur 2K - 3 K unter der Innentemperatur gehalten. Die Innentemperatur wird mit gleicher Kühlrate auf 117 °C gebracht und dann 60 Minuten konstant gehalten. Danach wird weiter bei einer Kühlrate von 40 K/h abdestilliert und so die Innentemperatur auf 111 °C gebracht. Bei dieser Temperatur setzt die Fällung, erkennbar an der Wärmeentwicklung, ein. Die Destillationsgeschwindigkeit wird soweit erhöht, dass die Innentemperatur nicht über 111.3 °C ansteigt. Nach 25 Minuten fällt die Innentemperatur ab, was das Ende der Fällung anzeigt. Durch weiteres Abdestillieren und Kühlung über den Mantel wird die Temperatur der Suspension auf 45 °C gebracht und die Suspension danach in einen Schaufeltrockner überführt. Das Ethanol wird bei 70 °C/ 400 mbar abdestilliert und der Rückstand anschließend bei 20 mbar/86 °C 3 Stunden nachgetrocknet.
Man erhält ein gefälltes PA 12 mit einem mittleren Korndurchmesser von 55 µm. Die Schüttdichte betrug 435g/l.

### Beispiel 2

Ein Pulver aus einem statistischen Copolyamid aus 40 Teilen Laurinlactam, 30 Teilen Caprolactam, und 30 Teilen eines äquimolaren Gemisches aus Dodecandisäure und Hexamethylendiamin, das durch hydrolytische Polykondensation erhalten worden war, wurde per Kaltvermahlung und anschließende Fraktionierung hergestellt. Das auf diesem Wege erhaltene Pulver wurde in einem Henschelmischer mit 0,1 Teilen Aerosil 200 versehen. Die Lösungsviskosität beträgt 1,7. Der MFR-Wert wurde mit 4 g/10min ermittelt, bei 160 °C/2,16 kg. Die Schüttdichte beträgt 491 g/l. Die Kornverteilung wurde wie folgt ermittelt: d10 = 17 µm, d50 = 62 µm, d90 = 112 µm.

### Beispiel 3

Ein Pulver aus einem statistischem Copolyamid aus 33 Teilen Laurinlactam, 33 Teilen Caprolactam, und 33 Teilen eines äquimolaren Gemisches aus Adipinsäure und Hexamethylendiamin, das durch hydrolytische Polykondensation erhalten worden war, wurde per Kaltvermahlung und anschließende Fraktionierung hergestellt. Das auf diesem Wege erhaltene Pulver wurde in einem Henschelmischer mit 0,1 Teilen Aerosil 200 versehen. Die Lösungsviskosität beträgt 1,7. Der MFR-Wert wurde mit 6 g/10min ermittelt, bei 160 °C/2,16 kg. Die Schüttdichte beträgt 475 g/l. Die Kornverteilung wurde wie folgt ermittelt: d10 = 11 µm, d50 = 65 µm, d90 = 105 µm.

### Beispiel 4

Ein Pulver aus einem statistischem Copolyamid aus 50 Teilen Laurinlactam, 20 Teilen Caprolactam, und 30 Teilen eines äquimolaren Gemisches aus Dodecandisäure und Hexamethylendiamin, das durch hydrolytische Polykondensation erhalten worden war, wurde per Kaltvermahlung und anschließende Fraktionierung hergestellt. Das auf diesem Wege erhaltene Pulver wurde in einem Henschelmischer mit 0,1 Teilen Aerosil R812 versehen. Die Lösungsviskosität beträgt 1,55. Der MFR-Wert wurde mit 12 g/10min ermittelt, bei 160 °C/2,16 kg. Die Schüttdichte beträgt 458 g/l. Die Kornverteilung wurde wie folgt ermittelt: d10 = 13 µm, d50 = 66 µm, d90 =111 µm.

### Beispiel 5

Ein Pulver aus einem statistischem Copolyamid aus 60 Teilen Laurinlactam, 25 Teilen Caprolactam, und 15 Teilen eines äquimolaren Gemisches aus Adipinsäure und Hexamethylendiamin, das durch hydrolytische Polykondensation erhalten worden war, wurde per Kaltvermahlung und anschließende Fraktionierung hergestellt. Das auf diesem Wege erhaltene Pulver wurde in einem Henschelmischer mit 0,1 Teilen Aerosil 200 versehen. Die Lösungsviskosität beträgt 1,6. Der MFR-Wert wurde mit 9 g/10min ermittelt, bei 160 °C/2,16 kg. Die Schüttdichte beträgt 462 g/l. Die Kornverteilung wurde wie folgt ermittelt: d10 = 18 µm, d50 = 75 µm, d90 = 112 µm.

### Beispiel 6

Ein Pulver aus einem statistischem Copolyamid aus 15 Teilen Laurinlactam und 85 Teilen eines äquimolaren Gemisches aus Dodecandisäure und Isophorondiamin, das durch hydrolytische Polykondensation erhalten worden war, wurde per Kaltvermahlung und anschließende Fraktionierung hergestellt. Das auf diesem Wege erhaltene Pulver wurde in einem Henschelmischer mit 0,05 Teilen Aerosil 200 versehen. Die Lösungsviskosität beträgt 1,7. Der MFR-Wert wurde mit 5 g/10min ermittelt, bei 230 °C/2,16 kg. Die Schüttdichte beträgt 458 g/l. Die Kornverteilung wurde wie folgt ermittelt: d10 =12 µm, d50 = 56 µm, d90 = 105 µm.

### Beispiel 7

Ein Pulver aus einem statistischem Copolyester aus 100 Teilen Butandiol, 45 Teilen Terephthalsäure und 55 Teilen Isophtalsäure, das durch hydrolytische Polykondensation erhalten worden war, wurde per Kaltvermahlung und anschließende Fraktionierung hergestellt Das auf diesem Wege erhaltene Pulver wurde in einem Henschelmischer mit 0,2 Teilen Aerosil 200 versehen. Der MFR-Wert wurde mit 12 g/10min ermittelt, bei 160 °C/2,16 kg. Die Schüttdichte beträgt 459 g/l. Die Kornverteilung wurde wie folgt ermittelt: d10 = 10 µm, d50 = 61 µm, d90 =119 µm.

### Beispiel 8

Ein Pulver aus einem statistischem Copolyester aus 100 Teilen Butandiol, 11 Teilen Polyethylenglykol, 42 Teilen Terephthalsäure und 58 Teilen Isophtalsäure, das durch hydrolytische Polykondensation erhalten worden war, wurde per Kaltvermahlung und anschließende Fraktionierung hergestellt. Das auf diesem Wege erhaltene Pulver wurde in einem Henschelmischer mit 0,1 Teilen Aerosil 200 versehen. Die Schüttdichte beträgt 471 g/l. Der MFR-Wert wurde mit 10 g/10min ermittelt, bei 160 °C/2,16 kg. Die Kornverteilung wurde wie folgt ermittelt: d10 = 17 µm, d50 = 63 µm, d90 = 122 µm.

Die Mischung von Pulver aus den Beispielen 1 und 5 sowie die Mischung von Pulver aus Beispiel 6 mit Glaskugeln wurde auf einem Betonmischer hergestellt. Es wurden Glaskugeln Spheriglass A-Glas mit Coating von der Firma Potters mit einem Durchmesser von 35 µm verwendet.

### Weiterverarbeitung und Test

Ein 10x10 cm oben offener Kasten wurde mit einem Boden versehen, der über eine Spindel verfahrbar ist. Der Kasten wurde mit einem Heizband umwickelt, welches während der Versuche auf 90 °C eingestellt wurde. Der Boden wurde bis auf einen halben Zentimeter an die obere Kante bewegt; der verbliebene Raum wurde mit Pulver gefüllt und mit einer Metallplatte glattgestrichen. Anschließend wurde zunächst ein 1 mm dicker Metallrahmen auf den Rand des Kastens gelegt, darüber eine Metallplatte mit kleinerer runder Öffnung, die 1 mm Abstand zu der Pulverschicht hat. Mit einem Heizstrahler mit einer Leistung von 1000 Watt von der Firma AKO, der für 2 Sekunden bis auf einen Abstand von 2 cm von oben an die Versuchsanordnung herangefahren wurde, wurde die Pulverschicht innerhalb der kreisrunden Öffnung aufgeschmolzen. Die nächsten Schritte, Drehung der Spindel zum Absenken des Bodens um 0,2 mm sowie Auftrag der nächsten Pulverschicht und anschließend erneutes Senken des Heizstrahlers zu Aufschmelzen des Pulvers, wurden einige Male wiederholt. Nach Abkühlen der Versuchsanordnung sollte ein rundes Plättchen erhalten werden.

**Tabelle 1: Ergebnisse der Versuche gemäß der Beispiele**

| **Beispiel** | **Schmelzpunkt (DSC)** | **Bemerkung** |
|---|---|---|
| | **°C** | |
| Beispiel 1 (nicht erfindungsgemäß) | 187 | Deutlich höherer Energieeintrag erforderlich als bei den anderen Beispielen |
| Beispiel 2 | 112 | Gute Kantenschärfe, kaum Curl |
| Beispiel 3 | 115 | Gute Kantenschärfe, kaum Curl |
| Beispiel 4 | 113 | Gute Kantenschärfe, kaum Curl, leichte Klebneigung nach mehreren Schichten |
| Beispiel 5 | 123 | Gute Kantenschärfe, kaum Curl |
| 75 % Pulver aus Beispiel 5 und 25 % Pulver aus Beispiel 1 | n.b. | Gute Kantenschärfe, kein Curl |
| Beispiel 6 | 120 | Gute Kantenschärfe, kaum Curl |
| Beispiel 7 | 114 | Gute Kantenschärfe, kaum Curl |
| Beispiel 8 | 110 | Gute Kantenschärfe, kaum Curl, leichte Klebneigung nach mehreren Schichten |
| 80 % Pulver aus Beispiel 6 und 20 % Glaskugeln | n.b. | Gute Kantenschärfe, kein Curl |

Anhand der Beispiele kann sehr gut erkannt werden, dass erfindungsgemäße Polymerpulver in einem erfindungsgemäßen Verfahren sehr gut verarbeitet werden können.

In allen Beispielen mit erfindungsgemäßem Pulver konnten runde Plättchen mit zum Teil relativ scharfen Kanten erhalten werden. Ausnahme war das nicht erfindungsgemäße Pulver aus Beispiel 1, welches zu starken Curl zeigte, um mehr als eine Schicht sintern zu können. Das nicht erfindungsgemäße Pulver aus Beispiel 1 musste auch mindestens 5 Sekunden dem Heizstrahler ausgesetzt werden, damit überhaupt ein Aufschmelzen stattfinden konnte. Die eine Schicht zeigte deutliche Anbackungen über die gewünschte Kontur hinaus. Eine Verkürzung der Einwirkzeit bei gleichzeitiger Verringerung des Abstandes des Heizstrahlers brachte eine Verbesserung der Konturschärfe und es konnten ebenfalls ein Plättchen produziert werden, jedoch bleibt die Qualität des Bauteils unter derjenigen der erfindungsgemäßen Beispiele.

Die Pulver aus den Beispielen 4 und 8 zeigten mit steigender Versuchsdauer leichte Klebneigung beim Glattstreichen des neu aufgetragenen Pulvers. Sie befinden sich jedoch auch an der unteren Grenze für die Lösungsviskosität bzw. der oberen Grenze für den MFR-Wert.
Die Mischungen 75 % Pulver aus Beispiel 5 mit 25 % Pulver aus Beispiel 1 sowie 80 % Pulver aus Beispiel 6 mit 20 % Glaskugeln verhielten sich sehr günstig in Bezug auf die Neigung zum Curl.

## Patentansprüche

1. Verfahren zur Herstellung von Formkörpern durch ein schichtweise arbeitendes Verfahren, bei dem selektiv Bereiche der jeweiligen pulverförmigen Schicht durch den nicht fokussierten Eintrag elektromagnetischer Energie aufgeschmolzen werden, unter Verwendung eines Polymerpulvers,
**dadurch gekennzeichnet,**
**dass** das Pulver zumindest ein thermoplastisches statistisches Copolymer mit einem MFR-Wert nach ISO 1133 zwischen 12 und 1 g/10min aufweist und das Polymerpulver bei einer Baukammertemperatur zwischen 80 und 160 °C verarbeitet wird.

2. Verfahren nach Anspruch 1,
**dadurch gekennzeichnet,**
**dass** das Pulver zumindest ein thermoplastisches statistisches Copolymer mit einem MFR-Wert nach ISO 1133 zwischen 10 und 1 g/10min aufweist.

3. Verfahren nach einem der vorhergehenden Ansprüche,
**dadurch gekennzeichnet,**
**dass** das Pulver zumindest ein thermoplastisches statistisches Copolymer mit einem MFR-Wert nach ISO 1133 zwischen 12 und 1 g/10min aufweist, wobei die Selektivität durch Auftragung von Suszeptoren, Absorbern oder durch Masken erreicht wird.

4. Verfahren nach einem der vorhergehenden Ansprüche,
**dadurch gekennzeichnet,**
**dass** das Pulver zumindest ein thermoplastisches statistisches Copolymer mit einem MFR-Wert nach ISO 1133 zwischen 10 und 1 g/10min aufweist, wobei die Selektivität durch Auftragung von Suszeptoren, Absorbern oder durch Masken erreicht wird.

5. Verfahren nach einem der vorhergehenden Ansprüche,
**dadurch gekennzeichnet,**
**dass** das Pulver zumindest ein thermoplastisches statistisches Copolymer mit einem MFR-Wert nach ISO 1133 zwischen 12 und 1 g/10min aufweist, wobei die Selektivität durch Auftragung von Inhibitoren erreicht wird.

6. Verfahren nach zumindest einem der Ansprüche 1 bis 5,
**dadurch gekennzeichnet,**
**dass** das Pulver zumindest einen Copolyester aufweist.

7. Verfahren nach Anspruch 6,
**dadurch gekennzeichnet,**
**dass** das Pulver zumindest einen Copolyester, bestehend aus mindestens einem der Monomerbausteine aus der Gruppe Adipinsäure, Isophthalsäure, Dimethylphthalat, 1,4-Butandiol, 1,6-Hexandiol, Polyethylenglycol, aufweist.

8. Verfahren nach zumindest einem der Ansprüche 1 bis 5,
**dadurch gekennzeichnet,**
**dass** das Pulver zumindest ein Copolyamid aufweist.

9. Verfahren nach Anspruch 8,
**dadurch gekennzeichnet,**
**dass** das Pulver zumindest ein Copolyamid, bestehend aus mindestens einem der Bausteine aus der Gruppe der Lactame, der Diamin/Dicarbonsäure-Salze, und/oder der Aminocarbonsäuren, aufweist.

10. Verfahren nach einem der Ansprüche 8 bis 9,
**dadurch gekennzeichnet,**
**dass** das Pulver zumindest ein Copolyamid, bestehend aus mindestens einem der Bausteine aus der Gruppe Laurinlactam, Caprolactam, Aminoundecansäure, sowie annähernd äquimolaren Mengen der Dicarbonsäuren Adipinsäure, Korksäure, Azelainsäure, Sebazinsäure, Dodecandisäure, Brassylsäure, Tetradecandisäure, Pentadecandisäure, Octadecandisäure, Terephthalsäure, Isophthalsäure, und der Diamine Hexamethylendiamin, 2-Methylpentamethylendiamin, 2,2,4-Trimethylhexamethylendiamin, 2,4,4-Trimethylhexamethylendiamin, Isophorondiamin, Piperazin, Bis-(4-Aminocyclohexyl)-methan bzw. der daraus gebildeten Nylonsalze aufweist.

11. Verfahren nach einem der Ansprüche 8 bis 10,
**dadurch gekennzeichnet,**
**dass** das Pulver zumindest ein Copolyamid, bestehend aus Caprolactam, Laurinlactam, und AH-Salz, aufweist.

12. Verfahren nach einem der Ansprüche 8 bis 10,
**dadurch gekennzeichnet,**
**dass** das Pulver zumindest ein Copolyamid, bestehend aus Caprolactam, Laurinlactam, und DH-Salz, aufweist.

13. Verfahren nach einem der Ansprüche 8 bis 10,
**dadurch gekennzeichnet,**
**dass** das Pulver zumindest ein Copolyamid, bestehend aus Caprolactam und Laurinlactam, aufweist.

14. Verfahren nach zumindest einem der Ansprüche 8 bis 13,
**dadurch gekennzeichnet,**
**dass** das Pulver zumindest ein Copolyamid aufweist, wobei die relative Lösungsviskosität in m-Kresol nach DIN 53727 zwischen 1,55 und 1,9 beträgt.

15. Verfahren nach zumindest einem der Ansprüche 8 bis 13,
**dadurch gekennzeichnet,**
**dass** das Pulver zumindest ein Copolyamid aufweist, wobei die relative Lösungsviskosität in m-Kresol nach DIN 53727 zwischen 1,6 und 1,7 beträgt.

16. Verfahren nach zumindest einem der Ansprüche 1 bis 15,
**dadurch gekennzeichnet,**
**dass** es Hilfsstoffe und/oder Füllstoff und/oder Pigmente aufweist.

17. Verfahren nach Anspruch 16,
**dadurch gekennzeichnet,**
**dass** es als Hilfsstoff Rieselhilfsmittel aufweist.

18. Verfahren nach Anspruch 16,
**dadurch gekennzeichnet,**
**dass** es als Füllstoff Glaspartikel aufweist.

19. Verfahren nach Anspruch 16,
**dadurch gekennzeichnet,**
**dass** es als Hilfsstoff Metallseifen aufweist.

20. Verfahren nach zumindest einem der vorhergehenden Ansprüche,
**dadurch gekennzeichnet,**
**dass** das Polymerpulver bei einer Baukammertemperatur zwischen 85 und 120 °C verarbeitet wird.

21. Formkörper, hergestellt durch eines der Verfahren aus den vorhergehenden Ansprüchen,
**dadurch gekennzeichnet,**
**dass** er ein thermoplastisches statistisches Copolymeres mit einem MFR-Wert nach ISO 1133 zwischen 12 und 1 g/10min aufweist.

22. Formkörper nach Anspruch 21,
**dadurch gekennzeichnet,**
**dass** er zumindest einen Copolyester aufweist.

23. Formkörper nach Anspruch 21 oder 22,
**dadurch gekennzeichnet,**
**dass** er zumindest einen Copolyester, bestehend aus mindestens einem der Monomerbausteine aus der Gruppe Adipinsäure, Isophthalsäure, Dimethylphthalat, 1,4-Butandiol, 1,6-Hexandiol, Polyethylenglycol, aufweist.

24. Formkörper nach Anspruch 21,
**dadurch gekennzeichnet,**
**dass** er zumindest ein Copolyamid aufweist.

25. Formkörper nach einem der Ansprüche 21 oder 24,
**dadurch gekennzeichnet,**
**dass** er zumindest ein Copolyamid, bestehend aus mindestens einem der Bausteine aus der Gruppe der Lactame, der Diamin/Dicarbonsäure-Salze und/oder der Aminocarbonsäuren, aufweist.

26. Formkörper nach einem der Ansprüche 21, 24 bis 25,
**dadurch gekennzeichnet,**
**dass** er zumindest ein Copolyamid, bestehend aus mindestens einem der Bausteine aus der Gruppe Laurinlactam, Caprolactam, Aminoundecansäure sowie annähernd äquimolaren Mengen der Dicarbonsäuren Adipinsäure, Korksäure, Azelainsäure, Sebazinsäure, Dodecandisäure, Brassylsäure, Tetradecandisäure, Pentadecandisäure, Octadecandisäure, Terephthalsäure, Isophthalsäure und der Diamine Hexamethylendiamin, 2-Methylpentamethylendiamin, 2,2,4-Trimethylhexamethylendiamin, 2,4,4-Trimethylhexamethylendiamin, Isophorondiamin, Piperazin, Bis-(4-Aminocyclohexyl)-methan bzw. der daraus gebildeten Nylonsalze, aufweist.

27. Formkörper nach einem der Ansprüche 21, 24 bis 25,
**dadurch gekennzeichnet,**
**dass** er zumindest ein Copolyamid, bestehend aus Caprolactam, Laurinlactam und AH-Salz, aufweist.

28. Formkörper nach einem der Ansprüche 21, 24 bis 25,
**dadurch gekennzeichnet,**
**dass** er zumindest ein Copolyamid, bestehend aus Caprolactam, Laurinlactam und DH-Salz, aufweist.

29. Formkörper nach einem der Ansprüche 21, 24 bis 26,
**dadurch gekennzeichnet,**
**dass** er zumindest ein Copolyamid, bestehend aus Caprolactam und Laurinlactam, aufweist.

30. Formkörper nach zumindest einem der Ansprüche 21, 24 bis 29,
**dadurch gekennzeichnet,**
**dass** er zumindest ein Copolyamid aufweist, welches eine relative Lösungsviskosität in m-Kresol nach DIN 53727 zwischen 1,55 bis 1,9 aufweist.

31. Formkörper nach zumindest einem der Ansprüche 21, 24 bis 30,
**dadurch gekennzeichnet,**
**dass** er zumindest ein Copolyamid aufweist, welches eine relative Lösungsviskosität in m-Kresol nach DIN 53727 zwischen 1,6 bis 1,7 aufweist.

32. Formkörper nach zumindest einem der Ansprüche 21 bis 31,
**dadurch gekennzeichnet,**
**dass** er Hilfsstoffe und/oder Füllstoff und/oder Pigmente aufweist.

33. Formkörper nach Anspruch 32,
**dadurch gekennzeichnet,**
**dass** er als Hilfsstoff Rieselhilfsmittel aufweist.

34. Formkörper nach Anspruch 32,
**dadurch gekennzeichnet,**
**dass** er als Füllstoff Glaspartikel aufweist.

35. Formkörper nach Anspruch 32
**dadurch gekennzeichnet,**
**dass** er als Hilfsstoff Metallseifen aufweist.

## Claims

1. Process for producing moldings by a layer-by-layer process in which regions of the respective pulverulent layer are selectively melted via unfocused introduction of electromagnetic energy, using a polymer powder,
**characterized**
**in that** the powder comprises at least one thermoplastic random copolymer with an ISO 1133 MFR value of from 12 to 1 g/10 min and the polymer powder is processed at a construction chamber temperature of from 80 to 160°C.

2. Process according to Claim 1,
**characterized**
**in that** the powder comprises at least one thermoplastic random copolymer with an ISO 1133 MFR value of from 10 to 1 g/10 min.

3. Process according to either of the preceding claims,
**characterized**
**in that** the powder comprises at least one thermoplastic random copolymer with an ISO 1133 MFR value of from 12 to 1 g/10 min, the selectivity being achieved via application of susceptors or of absorbers, or via masks.

4. Process according to any of the preceding claims,
**characterized**
**in that** the powder comprises at least one thermoplastic random copolymer with an ISO 1133 MFR value of from 10 to 1 g/10 min, the selectivity being achieved via application of susceptors or of absorbers, or via masks.

5. Process according to any of the preceding claims,
**characterized**
**in that** the powder comprises at least one thermoplastic random copolymer with an ISO 1133 MFR value of from 12 to 1 g/10 min, the selectivity being achieved via application of inhibitors.

6. Process according to at least one of Claims 1 to 5,
**characterized**
**in that** the powder comprises at least one copolyester.

7. Process according to Claim 6,
**characterized**
**in that** the powder comprises at least one copolyester containing at least one of the monomer units from the group of adipic acid, isophthalic acid, dimethyl phthalate, 1,4-butanediol, 1,6-hexanediol, polyethylene glycol.

8. Process according to at least one of Claims 1 to 5,
**characterized**
**in that** the powder comprises at least one copolyamide.

9. Process according to Claim 8,
**characterized**
**in that** the powder comprises at least one copolyamide containing at least one of the units from the group of the lactams, the diamine/dicarboxylic acid salts, and/or the aminocarboxylic acids.

10. Process according to Claim 8 or 9,
**characterized**
**in that** the powder comprises at least one copolyamide containing at least one of the units from the group of laurolactam, caprolactam, aminoundecanoic acid, and also containing approximately equimolar amounts of the dicarboxylic acids adipic acid, sorbic acid, azelaic acid, sebacic acid, dodecanedioic acid, brassylic acid, tetradecanedioic acid, pentadecanedioic acid, octadecanedioic acid, terephthalic acid, isophthalic acid, and of the diamines hexamethylenediamine, 2-methylpentamethylenediamine, 2,2,4-trimethylhexamethylenediamine, 2,4,4-tri-methylhexamethylenediamine, isophoronediamine, piperazine, bis(4-aminocyclohexyl)methane, or of the nylon salts formed therefrom.

11. Process according to any of Claims 8 to 10,
**characterized**
**in that** the powder comprises at least one copolyamide containing caprolactam, laurolactam, and AH salt.

12. Process according to any of Claims 8 to 10,
**characterized**
**in that** the powder comprises at least one copolyamide containing caprolactam, laurolactam, and DH salt.

13. Process according to any of Claims 8 to 10,
**characterized**
**in that** the powder comprises at least one copolyamide containing caprolactam and laurolactam.

14. Process according to any of Claims 8 to 13,
**characterized**
**in that** the powder comprises at least one copolyamide, the DIN 53727 relative solution viscosity in m-cresol being from 1.55 to 1.9.

15. Process according to at least one of Claims 8 to 13,
**characterized**
**in that** the powder comprises at least one copolyamide, the DIN 53727 relative solution viscosity in m-cresol being from 1.6 to 1.7.

16. Process according to at least one of Claims 1 to 15,
**characterized**
**in that** it comprises auxiliaries and/or filler and/or pigments.

17. Process according to Claim 16,
**characterized**
**in that** it comprises flow aids as auxiliary.

18. Process according to Claim 16,
**characterized**
**in that** it comprises glass particles as filler.

19. Process according to Claim 16,
**characterized**
**in that** it comprises metal soaps as auxiliary.

20. Process according to at least one of the preceding claims,
**characterized**
**in that** the polymer powder is processed at a construction chamber temperature of from 85 to 120°C.

21. Molding produced via one of the processes of the preceding claims,
**characterized**
**in that** it comprises a thermoplastic random copolymer with an ISO 1133 MFR value of from 12 to 1 g/10 min.

22. Molding according to Claim 21,
**characterized**
**in that** it comprises at least one copolyester.

23. Molding according to Claim 21 or 22,
**characterized**
**in that** it comprises at least one copolyester containing at least one of the monomer units from the group of adipic acid, isophthalic acid, dimethyl phthalate, 1,4-butanediol, 1,6-hexanediol, polyethylene glycol.

24. Molding according to Claim 21,
**characterized**
**in that** it comprises at least one copolyamide.

25. Molding according to Claim 21 or 24,
**characterized**
**in that** it comprises at least one copolyamide containing at least one of the units from the group of the lactams, the diamine/dicarboxylic acid salts, and/or the aminocarboxylic acids.

26. Molding according to any of Claims 21, 24 and 25,
**characterized**
**in that** it comprises at least one copolyamide containing at least one of the units from the group of laurolactam, caprolactam, aminoundecanoic acid, and also containing approximately equimolar amounts of the dicarboxylic acids adipic acid, sorbic acid, azelaic acid, sebacic acid, dodecanedioic acid, brassylic acid, tetradecanedioic acid, pentadecanedioic acid, octadecanedioic acid, terephthalic acid, isophthalic acid, and of the diamines hexamethylenediamine, 2-methylpentamethylenediamine, 2,2,4-trimethylhexamethylenediamine, 2,4,4-tri-methylhexamethylenediamine, isophoronediamine, piperazine, bis(4-aminocyclohexyl)methane, or of the nylon salts formed therefrom.

27. Molding according to any of Claims 21, 24 and 25,
**characterized**
**in that** it comprises at least one copolyamide containing caprolactam, laurolactam, and AH salt.

28. Molding according to any of Claims 21, 24 and 25
**characterized**
**in that** it comprises at least one copolyamide containing caprolactam, laurolactam, and DH salt.

29. Molding according to any of Claims 21 and 24 to 26,
**characterized**
**in that** it comprises at least one copolyamide containing caprolactam and laurolactam.

30. Molding according to at least one of Claims 21 and 24 to 29,
**characterized**
**in that** it comprises at least one copolyamide, the DIN 53727 relative solution viscosity in m-cresol being from 1.55 to 1.9.

31. Molding according to at least one of Claims 21 and 24 to 30,
**characterized**
**in that** it comprises at least one copolyamide, the DIN 53727 relative solution viscosity in m-cresol being from 1.6 to 1.7.

32. Molding according to at least one of Claims 21 to 31,
**characterized**
**in that** it comprises auxiliaries and/or filler and/or pigments.

33. Molding according to Claim 32,
**characterized**
**in that** it comprises flow aids as auxiliary.

34. Molding according to Claim 32,
**characterized**
**in that** it comprises glass particles as filler.

35. Molding according to Claim 32,
**characterized**
**in that** it comprises metal soaps as auxiliary.

## Revendications

1. Procédé pour la fabrication de corps façonnés, par un processus fonctionnant par couches, dans lequel des zones de la couche de poudre respective sont sélectivement fondues par l'apport non focalisé d'énergie électromagnétique, avec utilisation d'une poudre de polymère,
**caractérisé en ce que** la poudre comporte au moins un copolymère statistique thermoplastique ayant un indice MFR selon ISO 1133 compris entre 12 et 1 g/10 min et la poudre de polymère est mise en oeuvre à une température de la chambre de construction comprise entre 80 et 160 °C.

2. Procédé selon la revendication 1,
**caractérisé en ce que**
la poudre comporte au moins un copolymère statistique thermoplastique ayant un indice MFR selon ISO 1133 compris entre 10 et 1 g/10 min.

3. Procédé selon l'une quelconque des revendications précédentes,
**caractérisé en ce que**
la poudre comporte au moins un copolymère statistique thermoplastique ayant un indice MFR selon ISO 1133 compris entre 12 et 1 g/10 min, la sélectivité étant réalisée par application de suscepteurs, d'absorbants ou au moyen de masques.

4. Procédé selon l'une quelconque des revendications précédentes,
**caractérisé en ce que**
la poudre comporte au moins un copolymère statistique thermoplastique ayant un indice MFR selon ISO 1133 compris entre 10 et 1 g/10 min, la sélectivité étant réalisée par application de suscepteurs, d'absorbants ou au moyen de masques.

5. Procédé selon l'une quelconque des revendications précédentes,
**caractérisé en ce que**
la poudre comporte au moins un copolymère statistique thermoplastique ayant un indice MFR selon ISO 1133 compris entre 12 et 1 g/10 min, la sélectivité étant réalisée par application d'inhibiteurs.

6. Procédé selon au moins l'une quelconque des revendications 1 à 5,
**caractérisé en ce que**
la poudre comporte au moins un copolyester.

7. Procédé selon la revendication 6,
**caractérisé en ce que**
la poudre comporte au moins un copolyester, constitué d'au moins l'un des composants monomères choisi dans le groupe constitué par l'acide adipique, l'acide isophtalique, le phtalate de diméthyle, le 1,4-butanediol, le 1,6-hexanediol, le polyéthylèneglycol.

8. Procédé selon au moins l'une quelconque des revendications 1 à 5,
**caractérisé en ce que**
la poudre comporte au moins un copolyamide.

9. Procédé selon la revendication 8,
**caractérisé en ce que**
la poudre comporte au moins un copolyamide, constitué d'au moins l'un des composants choisis dans le groupe des lactames, des sels d'acides dicarboxyliques/ diamines et/ou des acides aminocarboxyliques.

10. Procédé selon l'une quelconque des revendications 8 et 9,
**caractérisé en ce que**
la poudre comporte au moins un copolyamide, constitué d'au moins l'un des composants choisis dans le groupe constitué par le lauryllactame, le caprolactame, l'acide amino-undécanoïque, ainsi que des quantités approximativement équimolaires des acides dicarboxyliques acide adipique, acide subérique, acide azélaïque, acide sébacique, acide dodécanedioïque, acide brassylique, acide tétradécanedioïque, acide pentadécanedioïque, acide octadécanedioïque, acide téréphtalique, acide isophtalique, et des diamines hexaméthylènediamine, 2-méthylpentaméthylènediamine, 2,2,4-triméthylhexaméthylènediamine, 2,4,4-triméthyl-hexaméthylènediamine, isophoronediamine, pipérazine, bis-(4-aminocyclohexyl)-méthane ou des sels de Nylon formés à partir de ceux-ci.

11. Procédé selon l'une quelconque des revendications 8 à 10,
**caractérisé en ce que**
la poudre comporte au moins un copolyamide, constitué de caprolactame, lauryllactame et sel d'AH.

12. Procédé selon l'une quelconque des revendications 8 à 10,
**caractérisé en ce que**
la poudre comporte au moins un copolyamide, constitué de caprolactame, lauryllactame et sel de DH.

13. Procédé selon l'une quelconque des revendications 8 à 10,
**caractérisé en ce que**
la poudre comporte au moins un copolyamide, constitué de caprolactame et lauryllactame.

14. Procédé selon au moins l'une quelconque des revendications 8 à 13,
**caractérisé en ce que**
la poudre comporte au moins un copolyamide, la viscosité relative en solution dans du m-crésol selon DIN 53727 étant comprise entre 1,55 et 1,9.

15. Procédé selon au moins l'une quelconque des revendications 8 à 13,
**caractérisé en ce que**
la poudre comporte au moins un copolyamide, la viscosité relative en solution dans du m-crésol selon DIN 53727 étant comprise entre 1,6 et 1,7.

16. Procédé selon au moins l'une quelconque des revendications 1 à 15,
**caractérisé en ce**
**qu'**il comporte des adjuvants et/ou une charge et/ou des pigments.

17. Procédé selon la revendication 16,
**caractérisé en ce**
**qu'**il comporte comme adjuvant des adjuvants facilitant l'écoulement.

18. Procédé selon la revendication 16,
**caractérisé en ce**
**qu'**il comporte comme charge des particules de verre.

19. Procédé selon la revendication 16,
**caractérisé en ce**
**qu'**il comporte comme adjuvant des savons métalliques.

20. Procédé selon au moins l'une quelconque des revendications précédentes,
**caractérisé en ce que**
la poudre de polymère est mise en oeuvre à une température de la chambre de construction comprise entre 85 et 120 °C.

21. Corps façonné, produit par l'un des procédés des revendications précédentes,
**caractérisé en ce**
**qu'**il comporte un copolymère statistique thermoplastique ayant un indice MFR selon ISO 1133 compris entre 12 et 1 g/10 min

22. Corps façonné selon la revendication 21,
**caractérisé en ce**
**qu'**il comporte au moins un copolyester.

23. Corps façonné selon la revendication 21 ou 22,
**caractérisé en ce**
**qu'**il comporte au moins un copolyester, constitué d'au moins l'un des composants monomères choisi dans le groupe constitué par l'acide adipique, l'acide isophtalique, le phtalate de diméthyle, le 1,4-butanediol, le 1,6-hexanediol, le polyéthylèneglycol.

24. Corps façonné selon la revendication 21,
**caractérisé en ce**
**qu'**il comporte au moins un copolyamide.

25. Corps façonné selon l'une quelconque des revendications 21 et 24,
**caractérisé en ce**
**qu'**il comporte au moins un copolyamide, constitué d'au moins l'un des composants choisis dans le groupe des lactames, des sels d'acides dicarboxyliques/diamines et/ou des acides aminocarboxyliques.

26. Corps façonné selon l'une quelconque des revendications 21, 24 et 25,
**caractérisé en ce**
**qu'**il comporte au moins un copolyamide, constitué d'au moins l'un des composants choisis dans le groupe constitué par le lauryllactame, le caprolactame, l'acide amino-undécanoïque, ainsi que des quantités approximativement équimolaires des acides dicarboxyliques acide adipique, acide subérique, acide azélaïque, acide sébacique, acide dodécanedioïque, acide brassylique, acide tétradécanedioïque, acide pentadécanedioïque, acide octadécanedioïque, acide téréphtalique, acide isophtalique, et des diamines hexaméthylènediamine, 2-méthylpentaméthylènediamine, 2,2,4-triméthylhexaméthylènediamine, 2,4,4-triméthyl-hexaméthylènediamine, isophoronediamine, pipérazine, bis-(4-aminocyclohexyl)-méthane ou des sels de Nylon formés à partir de ceux-ci.

27. Corps façonné selon l'une quelconque des revendications 21, 24 et 25,
**caractérisé en ce**
**qu'**il comporte au moins un copolyamide, constitué de caprolactame, lauryllactame et sel d'AH.

28. Corps façonné selon l'une quelconque des revendications 21, 24 et 25,
**caractérisé en ce**
**qu'**il comporte au moins un copolyamide, constitué de caprolactame, lauryllactame et sel de DH.

29. Corps façonné selon l'une quelconque des revendications 21, 24 à 26,
**caractérisé en ce**
**qu'**il comporte au moins un copolyamide, constitué de caprolactame et lauryllactame.

30. Corps façonné selon au moins l'une quelconque des revendications 21, 24 à 29,
**caractérisé en ce**
**qu'**il comporte au moins un copolyamide qui présente une viscosité relative, en solution dans du m-crésol selon DIN 53727, comprise entre 1,55 et 1,9.

31. Corps façonné selon au moins l'une quelconque des revendications 21, 24 à 30,
**caractérisé en ce**
**qu'**il comporte au moins un copolyamide qui présente une viscosité relative, en solution dans du m-crésol selon DIN 53727, comprise entre 1,6 et 1,7.

32. Corps façonné selon au moins l'une quelconque des revendications 21 à 31,
**caractérisé en ce**
**qu'**il comporte des adjuvants et/ou une charge et/ou des pigments.

33. Corps façonné selon la revendication 32,
**caractérisé en ce**
**qu'**il comporte comme adjuvant des adjuvants facilitant l'écoulement.

34. Corps façonné selon la revendication 32,
**caractérisé en ce**
**qu'**il comporte comme charge des particules de verre.

35. Corps façonné selon la revendication 32,
**caractérisé en ce**
**qu'**il comporte comme adjuvant des savons métalliques.
